# EUROPEAN PATENT SPECIFICATION

(11) **EP 0 721 801 B1**
(45) Date of publication and mention of the grant of the patent: **02.06.1999**
(21) Application number: 95117717.9
(22) Date of filing: 09.11.1995
(51) Int. Cl.: B05B 1/02, B08B 7/00

(54) **C02 jet spray nozzle with multiple orifices**
CO2-Sprühdüse mit Mehrfachöffnung
Buse de pulvérisation de CO2 à ouvertures multiples

(30) Priority: 15.12.1994 US 356606
(43) Date of publication of application: 17.07.1996
(73) Proprietor: HE HOLDINGS, INC., Los Angeles, California 90080-0028 (US)
(72) Inventor: Krone-Schmidt, Wilfried, Fullerton,California 92633 (US)
(74) Representative: Winter, Brandl, Fürniss, Hübner, Röss, Kaiser, Polte, Kindermann Partnerschaft

(56) References cited:
- EP-A- 0 288 263
- EP-A- 0 546 359
- WO-A-90/09347
- DE-A- 4 410 119
- US-A- 5 125 979

## Description

### BACKGROUND OF THE INVENTION

1. Field of the Invention. The present invention relates to CO₂ jet spray nozzles, and more particularly, to CO₂ jet spray nozzles having multiple orifices.

2. Description of Related Art. The related prior art is believed to involve the use of a variable orifice. Despite much literature on the subject, this aspect has not been well explained or documented. Exact geometries of the nozzles vary and can be considered proprietary by each manufacturer. Fixed orifice nozzles are disclosed in U.S. Patent 4,806,171, issued to Whitlock et al., and U.S. Patent 4,962,891, issued to Layden. In each case a set of two (consecutive) orifices is given as essential to good jet spray (snow) production. In both cases the source of CO₂ is in gaseous form, and in that case two consecutive orifices appear to be needed. However, expanding CO₂ gas is inefficient and does not have the aggressiveness of CO₂ jet spray from liquid. In using liquid CO₂, two orifices are detrimental to snow production since the second orifice frequently clogs and causes sputtering of the CO₂ jet spray.

A further CO₂-snow cleaning nozzle comprising the features of the preamble of claim 1 is known from US-A-5 125 979.

It is an objective of the present invention to provide for improved CO₂ jet spray nozzles that overcome the problems of conventional nozzles. This objective is met by the nozzle of claim 1.

### SUMMARY OF THE INVENTION

The production of CO₂ jet spray requires an orifice to generate snow, and a nozzle to shape, control, and direct snow to a surface. In order to meet the above and other objectives, the present invention provides for multiple orifice nozzles for use in producing CO₂ jet spray. In the present invention, a pattern of orifices forms a critical orifice, which is an integral part of the nozzle. By fabricating different nozzles in which orifice size, orifice geometry (round, oval, or elongated slit), total orifice area, nozzle diameter and nozzle length is varied within a well defined matrix, any intensity of CO₂ jet spray may be obtained. By varying the arrangement of the orifices, nozzle geometry, and nozzle length, different spray patterns may be provided.

More particularly, the present CO₂ jet spray nozzle comprises a body, an elongated nozzle tube extending from the body, and an orifice member disposed in the nozzle tube adjacent the body that has a plurality of orifices disposed therein. The orifices are laser drilled through the orifice member, or are formed by means of electron discharge machining (EDM), for example. The body has an input aperture that mates with a source of CO₂ gas and an elongated tube extending toward an output end. The body has a first axial hole of a predetermined depth disposed along an axis of the body adjacent the output end, and a centrally located second axial hole having a diameter that may be different than the diameter of the first axial hole disposed through the remaining length of the body. The orifice member is disposed at the bottom of the first axial hole and has a circular input aperture that couples CO₂ gas to the plurality of orifices. The elongated nozzle tube is disposed in the first axial hole so that it abuts the orifice member and protrudes a predetermined length in front of the body. The orifice member may have a circular pattern of orifices that provide a circular CO₂ spray pattern. The orifice member and nozzle tube are typically welded together to prevent leakage.

The present invention also contemplates a linear jet spray nozzle that contains multiple orifices each with different dimensions or one that uses a changing density of orifices, such that it starts out on one side of the nozzle with a large number of orifices per linear cm, and gradually changes to a relatively small number of orifices per cm on the opposite side.

### BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which:
Fig. 1 illustrates a cross sectional view of a CO₂ jet spray nozzle having multiple orifices in accordance with the principles of the present invention;
Fig. 2a is a cross sectional view of the orifice disk employed in the CO₂ jet spray nozzle of Fig. 1;
Figs 2b-2d show several orifice patterns that may be employed in the CO₂ jet spray nozzle of Fig. 1;
Figs. 3a and 3b show representations of linear nozzles having multiple orifices each with different dimensions; and
Fig. 3c shows a representation of a linear nozzle having a changing density of orifices 21.

### DESCRIPTION OF THE PREFERRED EMBODIMENTS

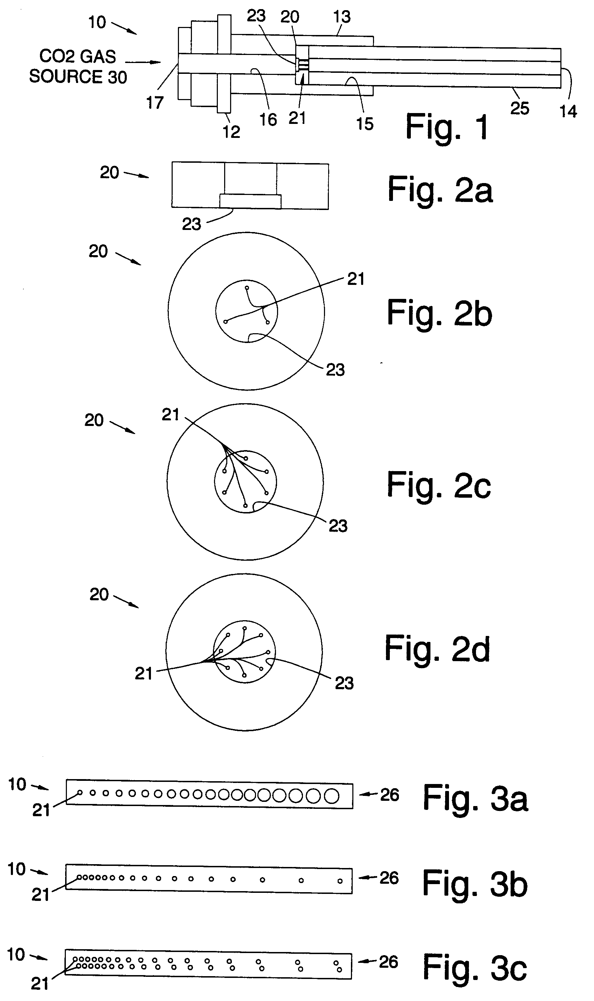

Referring to the drawing figure, Fig. 1 illustrates a cross sectional view of a CO₂ jet spray nozzle 10 having multiple orifices 21, or a multiple orifice nozzle 10, in accordance with the principles of the present invention. The multiple orifice nozzle 10 is comprised of a body 12 that comprises a metal gasket seal fitting 12 having an input aperture 17 that mates with a source 30 of CO₂ gas. The metal gasket seal fitting 12 is commercially available from Cajon, for example, part number SS-4-VCR-3, for example. The body 12 or fitting 12 has an elongated tube 13 extending toward an output end 14 of the nozzle 10. A first axial hole 15 is formed to a predetermined depth along the axis of the body 12 adjacent the output end 14 of the nozzle. A centrally located second axial hole 16 having a diameter that is smaller than the diameter of the first axial hole 15 is disposed through the remaining length of the body 12. Thus the body 12 has an axially disposed hole formed therethrough that has a smaller diameter adjacent an input end of the nozzle 10 and a larger diameter adjacent the output end 14 of the nozzle 10.

An orifice disk 20 or orifice button 20 is disposed adjacent to the bottom of the first axial hole 15 and has a plurality of small orifices 21 therein. The orifice disk 20 has a circular input aperture 23 disposed at an input end thereof. A series of round orifices 21, for example, may be laser drilled through the central portion of the orifice disk 20 and within the diameter of the input aperture 23 in a predetermined pattern. Alternatively, the orifices 21 may be formed by by means of electron discharge machining (EDM), for example. An elongated nozzle tube 25 having an outer diameter slightly less that the internal diameter of the first axial hole 15 is disposed in the first axial hole 15 so that it abuts the orifice disk 20 and is welded in place along the length of the first axial hole 15. The nozzle tube 25 protrudes about two-thirds of its length in front of the body 12.

The orifice disk 20 and nozzle tube 25 are fabricated in two parts and then welded together to fix the nozzle geometry and to prevent leakage. The present multiple orifice nozzle 10 disclosed herein was fabricated to clean cutting tools prior to nitriding. The pattern of orifices 21 forms a critical orifice, which is an integral part of the nozzle 10. By fabricating different nozzles 10 that comprise different orifice disks 20 in which orifice size, orifice geometry (round, oval, or elongated slit), total orifice area, nozzle diameter and nozzle length is varied within a well defined matrix, any intensity of CO₂ jet spray may be obtained. By varying the arrangement of the orifices 21, nozzle geometry, and nozzle length, different spray patterns may be provided.

Figs. 2a-2d illustrate exemplary embodiments of the orifice disk 20. Fig. 2a shows a cross sectional view of the orifice disk 20. Several typical orifice patterns that may be formed in the orifice disk 20 are shown in Figs. 2b-2d. Fig. 2b shows a disk 20 having three orifices 21. The orifice 21 may have a 76 µm (0.003 inch) diameter, a 127 µm (0.005 inch) diameter, or a 203 µm (0.008 inch) diameter, for example. Fig. 2c shows a disk 20 having six orifices 21 each having a 76 µm (0.003 inch), a 127 µm (0.005 inch), or a 203 µm (0.008 inch) diameter. Fig. 2d shows a disk 20 having eight orifices 21 each having a 76 µm (0.003 inch), a 127 µm (0.005 inch), or a 203 µm (0.008 inch) diameter. Fig. 2d shows the disk 20 with eight orifices 21 that was used in a specific embodiment of the nozzle 10 for which the present invention was conceived.

Thus, the orifice disks 20 illustrated by Figs. 2a-2d represent nine different orifice disks 20 that were fabricated, having orifices 21 of 76 µm (0.003 inch), 127 µm (0.005 inch) and 203 µm (0.008 inch) diameters. Although a circular jet spray pattern is normally not generated using an orifice disk 20 that contains several holes with different diameters, it is to be understood that different spray patterns may readily be produced by appropriately selecting orifices 21 of different diameters and using them in one orifice disk 20.

By way of example, to provide a circular spray pattern, a circular pattern of orifices 21 is used. With regard to the application for which the present invention was developed, a fine CO₂ snow spray was desired, and therefore 76 µm (0.003 inch) diameter orifices 21 were used. The spray distance required a total orifice area of 0,04 mm² (6x10⁻⁵ square inches), and therefore 8 orifices 21 were required. A footprint of 3,2 mm (0.125 inches) was considered optimum and when used with multiple orifice nozzle 10 having a 3,2 mm (0.125 inch) internal diameter for the first axial hole 15, a circular pattern of 8 holes were drilled around a 1,5 mm (0.06 inch) diameter circle. Finally, tight control of the CO₂ spray pattern was achieved by separating the orifice disk 20 and the exit of the nozzle 10 by a distance of 3,8 cm (1.5 inches). The orifice density of the above-described round or circular jet spray nozzle 10 typically varies from 155 orifices per cm² (1000 orifices per square inch) (3 orifices 21 in a 1,6 mm (0.0625") diameter) to 403 per cm² (2600 per square inch) (8 orifices 21 in a 1,6 mm (0.0625") diameter).

The above described multiple orifice nozzle 10 was fabricated and tested and it was determined that it cleaned as well as a variable orifice nozzle operated at an equivalent setting. During extensive tests, the above-described multiple orifice nozzle 10 was able to clean fixtures to zero particles per item in a robotic system.

The present invention also contemplates a linear jet spray nozzle 10 that contains multiple orifices 21 each with different dimensions. Fig. 3a shows part of an end view of a representation of this type of linear nozzle 10. Another design for the linear nozzle 10 uses a changing density of orifices 21, examples of which are illustrated in Fig. 3b and 3c. Fig. 3b shows part of an end view of a nozzle 10 having a single row 26 of orifices 21, while Fig. 3c shows part of an end view of a nozzle 10 having a plurality of rows 26 of orifices 21. The nozzles 10 of Figs. 3b and 3c start out on one side with 39 orifices per cm (100 orifices 21 per (linear) inch), for example, and gradually change to about 10 orifices per cm (25 orifices 21 per inch), for example, on the opposite side.

The present invention improves upon single orifice nozzles that generate CO₂ snow. The first advantage of using a plurality of small orifices 21 is the ability to generate a smaller snow flake size while maintaining an output jet spray pressure required to provide precision cleaning. The second advantage is the ability to increase the output pressure far beyond the capacity of a nozzle that employs a single orifice. By laser beam drilling or electron discharge machining the plurality of orifices 21, more advantages are provided. The ability to fine-tune the nozzle 10 to provide certain operating parameters is provided by using a focused laser beam or electron discharge machining to increase the hole diameter by a fraction of 25 µm (one thousandth of an inch) for example. Furthermore, a single orifice 21 is as easily drilled as two or more orifices 21 using the laser beam or EDM, thus providing an economic advantage with respect to fabrication of the nozzle 10. The orifice pattern need not comprise single-size orifices 21, and by varying the sizes of the orifices 21 within the nozzle 10, distribution of the snow flakes can be favorable changed to more desirable parameters. Finally, a multitude of spray patterns may he generated using the present invention including a simple point spray, a fan spray, axial or radial sprays, or other patterns conforming to complex geometric spray patterns depending upon the particular orifice disk 20 that is selected.

Thus there has been described new CO₂ jet spray nozzles having multiple orifices. It is to be understood that the above-described embodiments are merely illustrative of some of the many specific embodiments that represent applications of the principles of the present invention. Clearly, numerous and other arrangements can be readily devised by those skilled in the art without departing from the scope of the invention as defined by the appended claims.

## Claims

1. A nozzle (10) for forming a jet spray of carbon dioxide snow from carbon dioxide gas, said nozzle (10) comprising:
a body (12) having an input aperture (17) that mates with a source (30) of carbon dioxide gas and having an elongated tube (13) extending toward an output end (14) thereof and having a first axial hole (15) having a predetermined depth disposed along an axis of the body (12) adjacent the output end (14), and a centrally located second axial hole (16) disposed through the remaining length of the body (12);
an orifice member (20) disposed adjacent the second axial hole (16) that has an input aperture disposed adjacent the second axial hole (16) and
an elongated nozzle tube (25) disposed in the first axial hole (15) so that it abuts the orifice member (20) characterised by the nozzle tube (25) protruding a predetermined length in front of the body (12), the second axial hole (16) having a diameter that is smaller than the diameter of the first axial hole (15) the orifice member (20) being disposed in the first axial hole (15) and a plurality of orifices (21) disposed in a predetermined pattern through a central portion of the orifice member (20) within the cross section of the input aperture (23); whereby carbon dioxide gas can be converted to carbon dioxide snow in said nozzle tube (25) to provide a jet spray of carbon dioxide snow in a predetermined spray pattern.

2. The nozzle of Claim 1 wherein the orifice member (20) is an orifice disk (20) which has a circular pattern of orifices (21) that provide a circular CO₂ spray pattern.

3. The nozzle of Claim 1 wherein the orifice member (20) has a linear pattern (26) of orifices (21) that provide a linear CO₂ spray pattern.

4. The nozzle of Claim 3 wherein the linear pattern (26) of orifices (21) comprises multiple orifices (21) each with different diameters.

5. The nozzle of Claim 3 wherein the linear pattern (26) of orifices (21) comprises a changing density of orifices (21) across the orifice member (20).

6. The nozzle of Claim 1 wherein the orifice member (20) and nozzle tube (25) are welded together to prevent lekeage.

7. The nozzle of Claim 1 wherein the orifice member (20) comprises laser drilled orifices (21).

8. The nozzle of Claim 1 wherein the orifice member (20) comprises orifices (21) formed by means of electron discharge machining.

9. The nozzle of Claim 1 wherein said orifices have a diameter within the range of about 0,076 mm to 0,203 mm.

## Patentansprüche

1. Eine Düse (10) zum Bilden eines Jet-Sprühstrahls aus Kohlendioxidschnee aus Kohlendioxidgas, wobei die Düse (10) aufweist:
einen Körper (12) mit einer Eingangsöffnung (17), die mit einer Kohlendioxidgasquelle (30) zusammenpaßt, und mit einer länglichen Röhre (13), die sich in Richtung eines Ausgangsende (14) davon erstreckt, und mit einem ersten axialen Loch (15) mit einer vorbestimmten Tiefe, das entLang einer Achse des Körpers (12) in der Nachbarschaft des Ausgangsende (14) angeordnet ist, und einem zentral angeordneten zweiten axialen Loch (16), das durch die verbleibende Länge des Körpers (12) hindurch angeordnet ist;
ein Öffnungsteil (20), das in der Nachbarschaft des zweiten axialen Loches (16) angeordnet ist und eine Eingangsöffnung besitzt, die in der Nachbarschaft des zweiten axialen Loches (16) angeordnet ist; und
eine längliche Düsenröhre (25), die in dem ersten axialen Loch (15) angeordnet ist, derart, daß sie an das Öffnungsteil (20) anstößt,
dadurch gekennzeichnet, daß
die Düsenröhre (25) eine vorbestimmte Länge vor dem Körper (12) hervorsteht, das zweite axiale Loch (16) einen Durchmesser besitzt, der kleiner als der Durchmesser des ersten axialen Loches (15) ist, das Öffnungsteil (20) in dem ersten axialen Loch (15) angeordnet ist und eine Vielzahl von Öffnungen (21) in einem vorbestimmten Muster durch einen zentralen Teilbereich des Öffnungsteils (20) hindurch innerhalb des Querschnitts der Eingangsöffnung (23) angeordnet sind, wodurch Kohlendioxidgas in Kohlendioxidschnee in der Düsenröhre (25) umgewandelt werden kann, um einen Jet-Sprühstrahl aus Kohlendioxidschnee in einem vorbestimmten Sprühmuster bereitzustellen.

2. Die Düse nach Anspruch 1, dadurch gekennzeichnet, daß das Öffnungsteil (20) eine Öffnungsscheibe (20) ist, die ein kreisförmiges Muster von Öffnungen (21) besitzt, die ein kreisförmiges CO₂-Sprühmuster liefern.

3. Die Düse nach Anspruch 1, dadurch gekennzeichnet, daß das Öffnungsteil (20) ein lineares Muster (26) von Öffnungen (21) besitzt, die ein lineares CO₂-Sprühmuster lifern.

4. Die Düse nach Anspruch 3, dadurch gekennzeichnet, daß das lineare Muster (26) von Öffnungen (21) mehrere Öffnungen (21) aufweist, alle mit verschiedenen Durchmessern.

5. Die Düse nach Anspruch 3, dadurch gekennzeichnet, daß das lineare Muster (26) von Öffnungen (21) eine sich verändernde Dichte von Öffnungen (21) über das Öffnungsteil (20) hinweg aufweist.

6. Die Düse nach Anspruch 1, dadurch gekennzeichnet, daß das Öffnungsteil (20) und die Düsenröhre (25) zusammengeschweißt sind, um einen Leckverlust zu vermeiden.

7. Die Düse nach Anspruch 1, dadurch gekennzeichnet, daß das Öffnungsteil (20) lasergebohrte Öffnungen (21) aufweist.

8. Die Düse nach Anspruch 1, dadurch gekennzeichnet, daß das Öffnungsteil (20) Öffnungen (21) aufweist, die durch Elektronenentladungsbearbeitung ausgebildet wurden.

9. Die Düse nach Anspruch 1, dadurch gekennzeichnet, daß die Öffnungen einen Durchmesser innerhalb des Bereiches von ungefähr 0,076 mm bis 0,203 mm besitzen.

## Revendications

1. Buse (10) pour pulvériser un jet de neige carbonique à partir d'anhydride carbonique gazeux, ladite buse (10) comportant :
un corps (12) ayant une ouverture d'entrée (17) qui s'accouple avec une source (30) d'anhydride carbonique gazeux et ayant un tube allongé (13) s'étendant vers une extrémité de sortie (14) de celui-ci et ayant un premier trou axial (15) présentant une profondeur prédéterminée disposé le long d'un axe du corps (12) adjacent à l'extrémité de sortie (14), et un second trou axial (16) situé centralement, disposé à travers la longueur restante du corps (12) ;
un élément (20) à orifices disposé de façon à être adjacent au second trou axial (16) qui présente une ouverture d'entrée disposée de façon à être adjacente au second trou axial (16) ; et
un tube allongé (25) de buse disposé dans le premier trou axial (15) afin de s'appliquer contre l'élément (20) à orifices, caractérisée par le fait que le tube (25) de buse fait saillie sur une longueur prédéterminée en avant du corps (12), le second trou axial (16) ayant un diamètre qui est inférieur au diamètre du premier trou axial (15), l'élément (20) à orifices étant disposé dans le premier trou axial (15) et plusieurs orifices (21) étant disposés suivant une configuration prédéterminée à travers une partie centrale de l'élément (20) à orifices à l'intérieur de la section transversale de l'ouverture d'entrée (23), grâce à quoi l'anhydride carbonique gazeux peut être transformé en neige carbonique dans ledit tube (25) de la buse pour produire un jet pulvérisé de neige carbonique suivant une configuration de pulvérisation prédéterminée.

2. Buse selon la revendication 1, dans laquelle l'élément (20) à orifices est un disque (20) à orifices qui présente une configuration circulaire d'orifices (21) produisant une configuration circulaire de pulvérisation de CO₂.

3. Buse selon la revendication 1, dans laquelle l'élément (20) à orifices présente une configuration linéaire (26) d'orifices (21) qui produit une configuration linéaire de pulvérisation de CO₂.

4. Buse selon la revendication 3, dans laquelle la configuration linéaire (26) d'orifices (21) comprend de multiples orifices (21) ayant chacun des diamètres différents.

5. Buse selon la revendication 3, dans laquelle la configuration linéaire (26) d'orifices (21) présente une densité changeante d'orifices (21) à travers l'élément (20) à orifices.

6. Buse selon la revendication 1, dans laquelle l'élément (20) à orifices et le tube (25) de buse sont soudés l'un à l'autre pour éviter les fuites.

7. Buse selon la revendication 1, dans laquelle l'élément (20) à orifices présente des orifices (21) percés au laser.

8. Buse selon la revendication 1, dans laquelle l'élément (20) à orifices présente des orifices (21) formés au moyen d'un usinage par décharge d'électrons.

9. Buse selon la revendication 1, dans laquelle lesdits orifices ont un diamètre compris dans la plage d'environ 0,076 mm à 0,203 mm.
